# EUROPEAN PATENT APPLICATION

(11) **EP 4 086 660 A1**
(43) Date of publication of application: **09.11.2022**
(21) Application number: 22160014.1
(22) Date of filing: 03.03.2022
(51) Int. Cl.: G01S 7/481, G01S 17/89

(54) **LIDAR DEVICE AND ELECTRONIC APPARATUS INCLUDING THE SAME**

(30) Priority: 06.05.2021 KR 20210058772
(71) Applicant: Samsung Electronics Co., Ltd., Gyeonggi-do, 16677 (KR)
(72) Inventor: KIM, Jungwoo, Suwon-si, 16678 (KR); OTSUKA, Tatsuhiro, Suwon-si, 16678 (KR); CHO, Yongchul, Suwon-si, 16678 (KR)
(74) Representative: Elkington and Fife LLP

(57) **Abstract**

A light detection and ranging (LiDAR) device includes: a light transmitter that generates a plurality of beams to be transmitted at different times, respectively; and splits each of the plurality of beams into a plurality of sub-beams and transmit the plurality of sub-beams to a plurality of subregions of a target region at each of the different times; a light receiver including: a plurality of photodetection pixels, each of which includes a photodetection element and a circuit element configured to process an output signal of the photodetection element; and a driving lens that is located on each of the plurality of photodetection pixels and moves to focus the plurality of sub-beams that are reflected from the plurality of subregions of the target region, on the photodetection element; and a processor that performs time-division driving on the light transmitter and control a movement of the driving lens.

## Description

### FIELD OF THE INVENTION

Apparatuses and methods consistent with example embodiments relate to a Light Detection and Ranging (LiDAR) device and an electronic apparatus including the same.

### BACKGROUND OF THE INVENTION

Light Detection and Ranging (LiDAR) systems have been applied in various fields, e.g., aerospace, geology, three-dimensional (3D) maps, cars, robots, drones, and so on.

In a LiDAR system, a Time-of-Flight (ToF) method of measuring a ToF of light is used as a basic operating principle. That is, a ToF is measured by emitting light of a certain wavelength, e.g., near-infrared rays (850 nm), toward a subject and receiving light of the certain wavelength reflected from the subject by a sensor. A distance to the subject may be calculated from the ToF. A three-dimensional (3D) image of the subject may be processed using distances calculated from multiple positions on the subject.

To detect the 3D image of the subject at a high speed, an area of the subject may be scanned at a high speed but crosstalk may occur due to light emitted at adjacent positions in this case. When the number of pixels of a receiver is increased to increase resolution, implementation of a processing circuit or a manufacturing process may be significantly complicated.

### SUMMARY OF THE INVENTION

One or more example embodiments provide a Light Detection and Ranging (LiDAR) device having a simple structure and capable of being driven at high speeds, and an electronic apparatus including the same.

According to an aspect of an example embodiment, a light detection and ranging (LiDAR) device may include: a light transmitter configured to: generate a plurality of beams to be transmitted at different times, respectively; and split each of the plurality of beams into a plurality of sub-beams and transmit the plurality of sub-beams to a plurality of subregions of a target region at each of the different times; a light receiver including: a plurality of photodetection pixels, each of which includes a photodetection element and a circuit element configured to process an output signal of the photodetection element; and a driving lens that is located on each of the plurality of photodetection pixels and configured to move to focus the plurality of sub-beams that are reflected from the plurality of subregions of the target region, on the photodetection element; and a processor configured to perform time-division driving on the light transmitter to transmit the plurality of beams at the different times, and control a movement of the driving lens in synchronization with the time-division driving.

The light transmitter may include: a light source array including a plurality of light sources; and an optical element configured to split light from the light source array into the plurality of beams.

The processor may be further configured to divide the plurality of light sources into a plurality of groups and sequentially drive the plurality of groups.

The photodetection element may be provided in a center region of each of the plurality of photodetection pixels, and the circuit element may be provided in a peripheral region of each of plurality of the photodetection pixels to be parallel with the photodetection element.

A ratio of an area of the photodetection pixel occupied by the photodetection element may be 20% or less.

A ratio of an area of the photodetection pixel occupied by the photodetection element may be 10% or less.

A size of each of the plurality of photodetection pixels may be greater than or equal to 50 *µ*m x50 *µ*m.

The circuit element may include a time counter configured to measure a time of flight of light detected by the photodetection element.

The circuit element may further include: a current-to-voltage conversion circuit configured to convert current output from the photodetection element into voltage; an amplifier configured to amplify the voltage obtained through conversion by the current-to-voltage conversion circuit; and a peak detector configured to detect a peak of a signal amplified by the amplifier.

A size of the driving lens may correspond to a size of a region of the photodetection pixel.

The driving lens included in each of the plurality of photodetection pixels may be integrally connected to each other to be moved together.

A number of the plurality of photodetection pixels may be equal to a number of the plurality of subregions.

The plurality of photodetection pixels may be arranged two-dimensionally in a 24x24 to 64x64 array.

The plurality of subregions may be arranged two-dimensionally in a 24x24 to 64x64 array.

A number of states in which the driving lens may be driven to obtain information of the target region is equal to a number of the plurality of beams.

The movement of the driving lens may include a horizontal movement, a tilt movement, and a combination thereof.

The photodetection element may include at least one of a complementary metal-oxide-semiconductor (CMOS) image sensor (CIS), an Avalanche photo diode (APD), or a single photon Avalanche diode (SAPD).

The processor may be further configured to control the light transmitter to provide one set of the plurality of sub-beams to the target region and start the time-division driving when the one set of the plurality of sub-beams that are reflected from the target region is detected by the light receiver.

The processor may be further configured to control the light transmitter to provide the plurality of sub-beams that are split from a first beam, among the plurality of beams, to the target region and provide the plurality of sub-beams that are split from a second beam, among the plurality of beams, to the target region when the plurality of sub-beams that are split from the first beam and are reflected from the target region, are not detected by the light receiver.

According to another aspect of an example embodiment, an electronic device may include the LiDAR device, a memory and a processor configured to load a command or data received from the LiDAR device to the memory, and process the command or data stored in the memory.

According to another aspect of an example embodiment, a method of controlling a light detection and ranging (LiDAR) device, may include: transmitting to a target region, a plurality of sub-beams that are split from each of a plurality of beams, at a plurality of different transmission times; and moving a driving lens, which is provided on each of a plurality of photodetection pixels, to a position that causes the plurality of sub-beams to be focused on a photodetection element included in each of the plurality of photodetection pixels, wherein the position of the driving lens changes to be different at each of the plurality of different transmission times.

### BRIEF DESCRIPTION OF THE DRAWINGS

The above and/or other aspects will be more apparent by describing certain example embodiments, with reference to the accompanying drawings, in which:
FIG. 1 is a conceptual diagram illustrating a schematic structure of a LiDAR device according to an embodiment;
FIG. 2 is a conceptual diagram illustrating providing light split into a plurality of beams to a plurality of subregions of a target region by a light transmitter of a LiDAR device according to an embodiment;
FIG. 3 is a conceptual diagram illustrating providing multiple sets of beams to a target region in a time-division manner by a light transmitter of a LiDAR device according to an embodiment;
FIG. 4 is a schematic plan view illustrating an arrangement of photodetection pixels included in a light receiver of a LiDAR device according to the embodiment;
FIG. 5 is a schematic cross-sectional view illustrating a structure of a driving lens included in a light receiver of a LiDAR device according to an embodiment;
FIGS. 6 and 7 are cross-sectional views illustrating examples of a movement of a driving lens included in a light receiver of a LiDAR device according to an embodiment;
FIG. 8 is a plan view illustrating an example of a structure of a photodetection pixel included in a light receiver of a LiDAR device according to an embodiment;
FIG. 9 is a conceptual diagram illustrating an example of a circuit configuration of a light receiver of a LiDAR device according to an embodiment;
FIGS. 10A and 10B are a plan view and a cross-sectional view schematically illustrating a structure of a photodetection pixel of a LiDAR device of a comparative example;
FIG. 11 is a flowchart of an example of a driving method of a LiDAR device according to an embodiment;
FIG. 12 is a schematic block diagram of an electronic apparatus including a LiDAR device according to an embodiment;
FIG. 13 is a perspective view of an example of an electronic apparatus to which a LiDAR device according to an embodiment is applied; and
FIGS. 14 and 15 are conceptual diagrams illustrating cases in which a LiDAR device is applied to a vehicle according to an embodiment, and are a cross-sectional view and a plan view, respectively.

### DETAILED DESCRIPTION

Example embodiments are described in greater detail below with reference to the accompanying drawings.

In the following description, like drawing reference numerals are used for like elements, even in different drawings. The matters defined in the description, such as detailed construction and elements, are provided to assist in a comprehensive understanding of the example embodiments. However, it is apparent that the example embodiments can be practiced without those specifically defined matters. Also, well-known functions or constructions are not described in detail since they would obscure the description with unnecessary detail.

As used herein, the term "and/or" includes any and all combinations of one or more of the associated listed items. Expressions such as "at least one of," when preceding a list of elements, modify the entire list of elements and do not modify the individual elements of the list. For example, the expression, "at least one of a, b, and c," should be understood as including only a, only b, only c, both a and b, both a and c, both b and c, all of a, b, and c, or any variations of the aforementioned examples.

Hereinafter, embodiments will be described in detail with reference to the accompanying drawings. Embodiments described below are merely examples and various modifications may be made therein. In the drawings, the same reference numerals represent the same elements and a size of each element may be exaggerated for clarity and convenience of description.

It will be understood that when one element is referred to as being "on" or "above" another element, the element may be on the other element in direct contact with the other element or without contacting the other element.

The terms 'first', 'second,' etc. may be used to describe various elements but are only used herein to distinguish one element from another element. These terms are not intended to limit materials or structures of elements.

As used herein, the singular expressions are intended to include plural forms as well, unless the context clearly dictates otherwise. It will be understood that when an element is referred to as "including" another element, the element may further include other elements unless mentioned otherwise.

Terms such as "unit", "module," and the like, when used herein, represent units for processing at least one function or operation, which may be implemented by hardware, software, or a combination of hardware and software.

The term "the" and demonstratives similar thereto may be understood to include both singular and plural forms.

Unless explicitly stated that operations of a method should be performed in an order described below, the operations may be performed in an appropriate order. In addition, all terms indicating examples (e.g., etc.) are only for the purpose of describing technical ideas in detail, and thus the scope of the present disclosure is not limited by these terms unless limited by the claims.

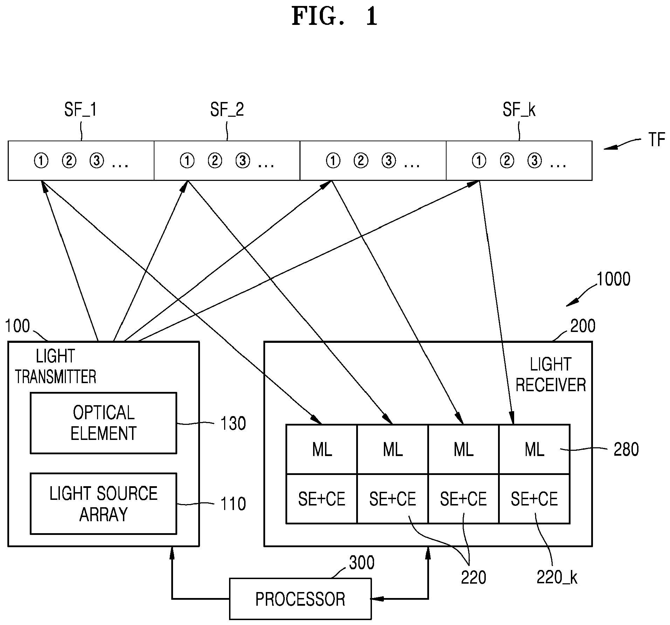

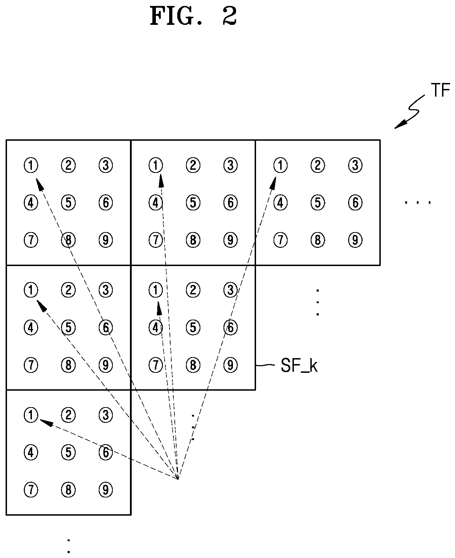

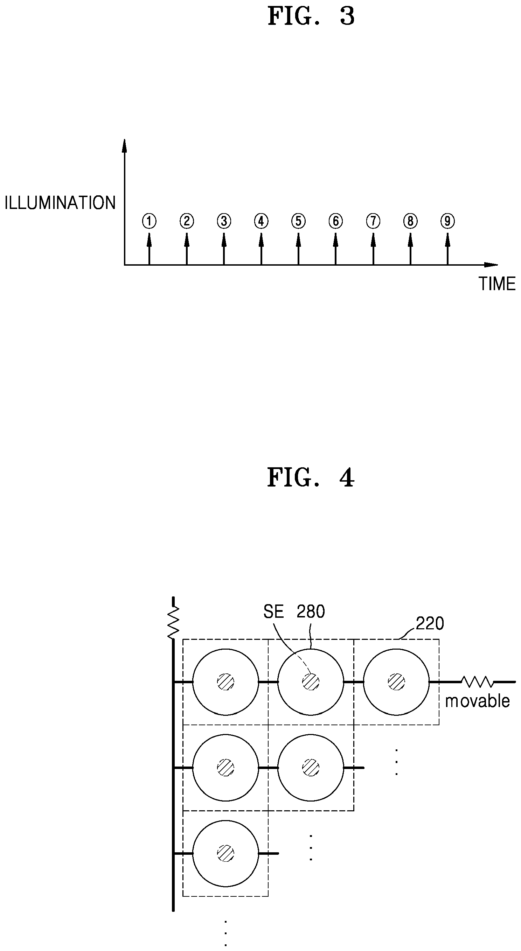

FIG. 1 is a conceptual diagram illustrating a schematic structure of a LiDAR device according to an embodiment. FIG. 2 is a conceptual diagram illustrating providing a plurality of split beams to a plurality of subregions of a target region by a light transmitter of a LiDAR device according to an embodiment. FIG. 3 is a conceptual diagram illustrating providing multiple sets of beams to a target region in a time-division manner by the light transmitter of the LiDAR device according to an embodiment.

Referring to FIG. 1, a LiDAR device 1000 includes a light transmitter 100 emitting light to a target region TF, which is a target, a light receiver 200 receiving the light that is emitted from the light transmitter 100 and then is reflected from the target region TF, and a processor 300 controlling the light transmitter 100 and the light receiver 200.

The light transmitter 100 generates a plurality of beams, which are to be split and then to be propagated tor a plurality of subregions SF_k of the target region TF. The light transmitter 100 may include a light source array 110 including a plurality of light sources and an optical element 130 configured to split light from the light source array 110 into a plurality of beams. The optical element 130 may include, for example, a diffraction optical element (DOE). The optical element 130 may include one or more lenses, in addition to the DOE.

The plurality of beams generated by the light transmitter 100 may include multiple sets of different beams, and the multiple sets of different beams may be provided to the target region TF at different timings. That is, the plurality of beams may be time-divided into the multiple sets of different beams and provided to the target region TF. The target region TF may be divided into the plurality of subregions SF_k. The plurality of subregions SF_k may be arranged in a two-dimensional (2D) array as illustrated in FIG. 2. The plurality of subregions SF-k may be arranged in, for example, a 2D 24x24 or 64x64 array but are not limited thereto. As illustrating in FIGS. 2 and 3, a beam may be divided into multiple sets of beams and the multiple sets of beams may be sequentially emitted toward positions of the subregions SF_k divided from the target region TF. In FIG. 2, positions indicated by the same number are positions, which are dispersed on the target region TF and to which beams belonging to the same set among the multiple sets of beams provided to the subregions SF_k reach at the same time. Beams may be provided simultaneously toward positions ① on the subregions SF_k divided from the target region TF, provided toward positions ② at a next timing, provided toward positions ③ at a next timing, and sequentially provided toward positions ④ to ⑨ at next timings. The multiple sets of sequential beams are directed to different positions on the subregions SF_k, and the different positions may not be attached to each other and may be spaced apart from each other by a certain distance. Such emission of light may be referred to as digital scan. For example, the positions ① in the plurality of subregions SF may be spaced apart from each other by the same interval as the interval between the positions ② in the plurality of subregions SF. A plurality of beams of each set may be distributed to the entire target region TF to simultaneously illuminate the entire target region TF. In this case, the plurality of beams simultaneously emitted are not spatially consecutive and are spaced a certain distance from each other and thus emission of light may be referred to as digital flash.

To drive the light transmitter 100, the plurality of light sources included in the light source array 110 may be driven by being divided into a plurality of groups. Under control of the processor 300, light sources of a group of the light source array 110 may be driven to emit beams toward the positions ① and light sources of another group may be driven at another timing to emit beams toward the positions ②.

The light receiver 200 includes a plurality of photodetection pixels 220, and a driving lens ML 280 facing the plurality of photodetection pixels 220 to adjust a position at which reflected light of light transmitted from the light transmitter 100 is to be focused.

The photodetection pixel 220 may include a photodetection element SE and a circuit element CE for processing a signal from the photodetection element SE. A region of the photodetection pixel 220 is divided into a region occupied by the photodetection element SE and a region occupied by the circuit element CE, and incident light may not be incident on the photodetection element SE depending on a direction of light incident on the photodetection pixel 220 when a fixed lens is used rather than a movable lens, such as the driving lens 280. In an embodiment, the driving lens 280 is employed to focus light incident in various directions on the photodetection element SE.

The number of photodetection pixels 220 may be set to be equal to the number of subregions SF_k divided from the target region TF. The photodetection pixel 220 and the photodetection pixel 220_k may be interchangeably used with each other. The photodetection pixel 220 may be referred to as a photodetection pixel 220_k when described with respect to the relationship with the subregions SF_k. Reflected light of beams emitted to the same subregion SF_k may be detected in the same photodetection pixel 220_k. For example, light reflected from a first subregion SF_1 may be detected in a photodetection pixel 220_1, and light reflected from a k^{th} subregion SF_k may be detected in a photodetection pixel 220_k.

Because positions of beams split and emitted to the k^{th} subregion SF_k are different from each other, reflected light of the beams is incident on the photodetection pixel 220_k at different angles. FIG. 1 illustrates only incident light reflected at positions ① on the subregions SF_1 to SF_k for convenience of description. The driving lens 280 may be moved such that light reflected at different positions on the subregions SF_1 to SF_K may be incident on the photodetection elements SE of the photodetection pixels SF_1 to SF_k corresponding thereto. The movement of the driving lens 280 is synchronized with time-division driving of the light transmitter 100. That is, when the light transmitter 100 splits a plurality of beams towards the positions ① at time T₁, the driving lens 280 is driven to a first detection position on the photodetection element SE at which light reflected at the positions ① is focused. When the light transmitter 100 splits a plurality of beams towards the positions ② at time T₂, the driving lens 280 is driven to a second detection position on the photodetection element SE at which light reflected at the positions ② is focused. When the light transmitter 100 splits a plurality of beams towards the positions ③ at time T₃, the driving lens 280 is driven to a third detection position on the photodetection element SE at which light reflected at the positions ③ is focused. As described above, the number of position states in which the driving lens 280 is driven is set to be equal to the number of sets of beams into which the plurality of beams are time-divided by the light transmitter 100. As shown in the drawing, when the light transmitter 100 provides beams time-divided into nine sets of beams, the driving lens 280 may be driven in predetermined nine position states corresponding to the nine sets of beams.

As described above, the processor 300 controls time-division driving of the light transmitter 100 and controls movement of the driving lens 280 in synchronization with the timing-division driving. In addition, the processor 300 may analyze and perform an operation on a detection signal received by the light receiver 200 to obtain 3D information about a subject present in the target region TF.

The processor 300 may determine whether there is a subject in the target region TF before digital-scanning the entire target region TF. For example, beams of one of the multiple sets of beams may be provided to the target region TF, and when reflected light of light transmitted from the light transmitter 100 is detected by the light receiver 200, it may be determined that there is a subject in the target region TF and the light transmitter 100 may be controlled to start time-division driving as described above.

When the reflected light of the light transmitted from the light transmitter 100 is not detected by the light receiver 200, the processor 300 may control the light transmitter 100 to repeatedly provide the beams of the one set to the target region TF, at predetermined interval.

The LiDAR device 1000 may further include a memory, and a program for execution of operations of the processor 300 may be stored in the memory.

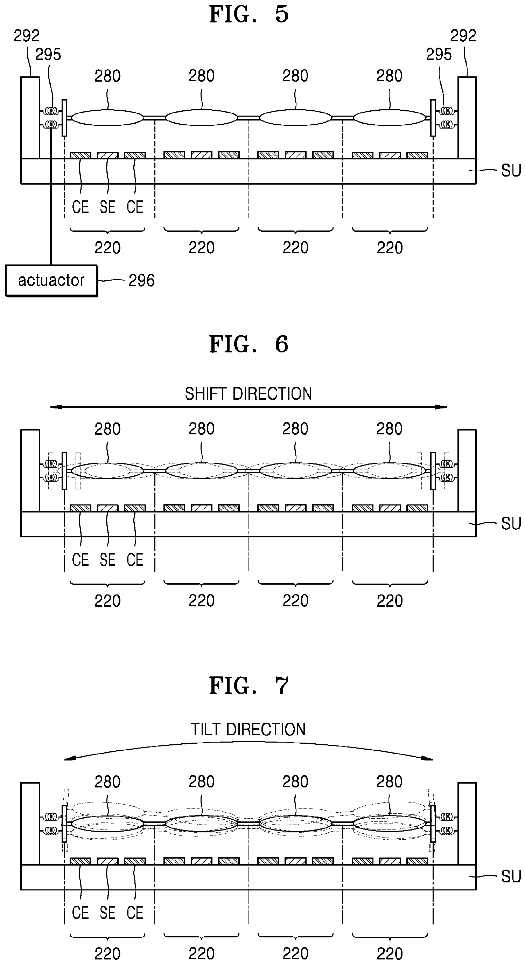

FIG. 4 is a schematic plan view illustrating an arrangement of photodetection pixels included in a light receiver of a LiDAR device according to the embodiment. FIG. 5 is a schematic cross-sectional view illustrating a structure of a driving lens included in a light receiver of a LiDAR device according to an embodiment.

A plurality of photodetection pixels 220 may be arranged in a two-dimensional (2D) array as shown in FIG. 4, and may be arranged, for example, in a 2D array such as a plurality of subregions SF_k as shown in FIG. 2. The plurality of photodetection pixels 220 may be arranged two dimensionally in a 24x24 to 64x64 array. However, embodiments are not limited thereto.

A driving lens 280 having a size corresponding to each of the photodetection pixels 220 may be provided at a position facing the photodetection element SE. The driving lenses 280 may be integrally connected to be moved together. However, this is only an example and embodiments are not limited thereto. The driving lenses 280 may not be connected to be individually driven or only a part thereof may be connected to be driven in units of connected groups of driving lenses 280.

Referring to FIG. 5, fixed frames 292 may be provided on both ends on a substrate SU including a plurality of photodetection pixels 220. Driving lenses 280 may be connected between two opposing plates which are connected to the fixed frames 292 through elastic support members 295. Each of the driving lenses 280 may face one of the plurality of photodetection pixels 220. An actuator 296 may be connected to the elastic support members 295. Various types of driving structures such as a voice coil motor and a shape memory alloy may be used as the actuator. The type or number of elastic support members 295 is not limited to that the illustrated in the drawing and may be changed variously.

FIGS. 6 and 7 are cross-sectional views illustrating examples of a movement of a driving lens included in a light receiver of a LiDAR device according to an embodiment.

A driving lens 280 may be moved horizontally from side to side as shown in FIG. 6. The driving lens 280 may be moved in a Y-axis direction perpendicular to an X-axis direction, as well as the X-axis direction illustrated in the drawing. The Y-axis direction may refer to a direction along which the driving lenses 280 are arranged. The driving lenses 280 may be positioned at the same level with respect to each other in the Y-axis direction, while the level of the driving lenses 280 that is measured from the substrate SU may change while the movement occurs in the Y-axis direction. As shown in FIG. 7, a driving lens 280 may be tilt-driven such that heights of both ends thereof are different from each other. The tilt-driving may also be performed with respect to a Y-axis direction. A movement of the driving lens 280 may include various movements, including a combination of a horizontal movement and a tilt movement. While the tilt-driven movement occurs, the driving lens 280 may be positioned at the different levels from each other in the Y-axis direction. An optical image stabilization (OIS) technique may be employed as a configuration of moving the driving lens 280.

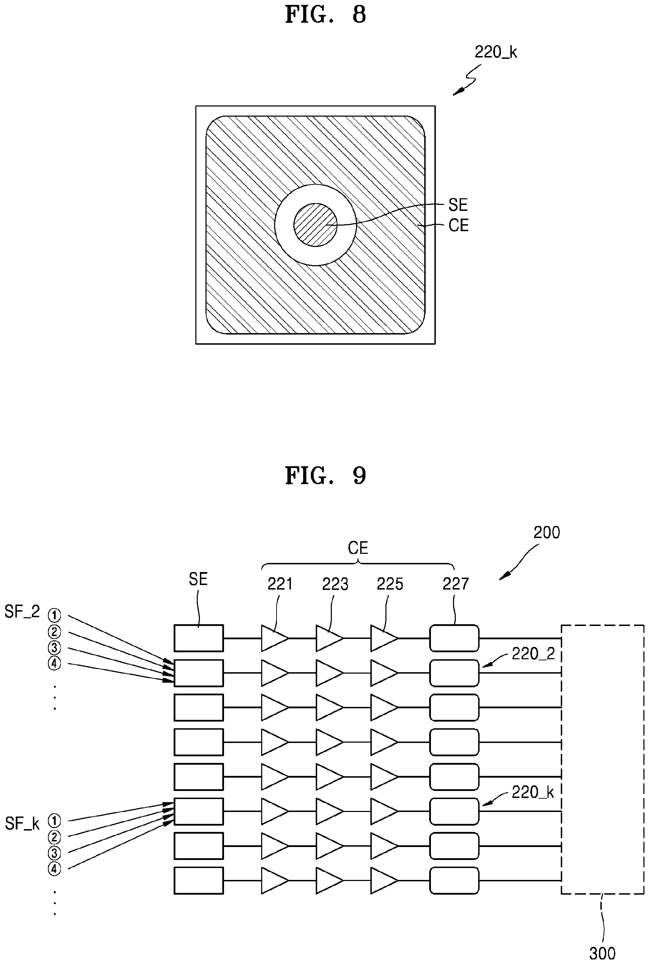

FIG. 8 is a plan view illustrating an example of a structure of a photodetection pixel included in a light receiver of a LiDAR device according to an embodiment.

A photodetection pixel 220_k includes a photodetection element SE and a circuit element CE. The photodetection element SE may include a single photon Avalanche diode (SAPD). The SAPD has high sensing sensitivity and may be useful to accurately analyze a subject in a target region. However, a circuit configuration for processing a detected signal may be somewhat complicated, and an area occupied by the circuit element CE in the photodetection pixel 220_k may be large.

The photodetection element SE may be disposed in a center region of the photodetection pixel 220_k, and the circuit element CE may be disposed in a peripheral region of the photodetection pixel 220_k to be parallel with the photodetection pixel SE. The ratio of an area occupied by the photodetection element SE in the photodetection pixel 220_k may be 50% or less, 20% or less, or 10% or less.

When the photodetection element SE and the circuit element CE are disposed in parallel with each other, a size of the photodetection pixel 220_k may be about 10 µm x 10 µm or more, about 50 µm x 50 µm or more, about 70 µm x 70 µm or more, or about 100 µm x100 µm or more.

In addition to the SAPD, an Avalanche photo diode (APD) or a CMOS image sensor (CIS) may be employed as the photodetection element SE.

FIG. 9 is a conceptual diagram illustrating an example of a circuit configuration of a light receiver of a LiDAR device according to an embodiment.

A circuit element CE included in each photodetection pixel 220_k of a light receiver 200 may include a time counter 227 for measuring a time of flight of light detected by a photodetection element SE. The circuit element CE may further include a current-to-voltage conversion circuit 221 that converts current output from the photodetection element SE into voltage, an amplifier 223 that amplifies the voltage output from the current-to-voltage conversion circuit 221, and a peak detector 225 that detects a peak of a signal amplified by the amplifier 223.

The photodetection element SE included in each photodetection pixel 220 may detect reflected light from a subregion SF_k and output a current signal. As shown in FIG. 9, a plurality of pieces of reflected light may be incident on photodetection pixels 220_2 and 220_k at different angles from different positions on a second subregion SF_2 and a k^{th} subregion SF_k, and in this case, as described above, such all of a plurality of pieces of reflected light may be incident on the photodetection elements SE of the photodetection pixels 220_2 and 220_k by driving the driving lens 280 as described above.

The current-to-voltage conversion circuit 221 may convert a current signal output from the photodetection element SE into a voltage signal. The amplifier 223 may amplify voltage signals obtained by conversion through a plurality of current-to-voltage conversion circuit 221. The peak detector 225 may detect a peak of a voltage signal amplified by the amplifier 223. For example, the peak detector 225 may detect a peak by detecting a rising edge and a falling edge of an electrical signal. Alternatively, the peak detector 225 may detect a peak by a constant fraction discriminator (CFD) method. The peak detector 225 may include a comparator and output a detected peak as a pulse signal.

The time counter 227 may measure a time of flight of light detected by the photodetection element SE. When a pulse signal output from the peak detector 225 is input to the time counter 227, the time counter 227 may measure a time of flight of light by calculating the number of periods of clock signals generated starting from a point in time when light is emitted from a light source. In addition, the time counter 227 may store information about measured times of flight of light in a register. The time counter 227 may be embodied as a time-to-digital converter (TDC).

A result of measurement by the time counter 227 may be transmitted to the processor 300, and the processor 300 may perform data processing using the result of measurement to analyze the position, shape, etc. of an object.

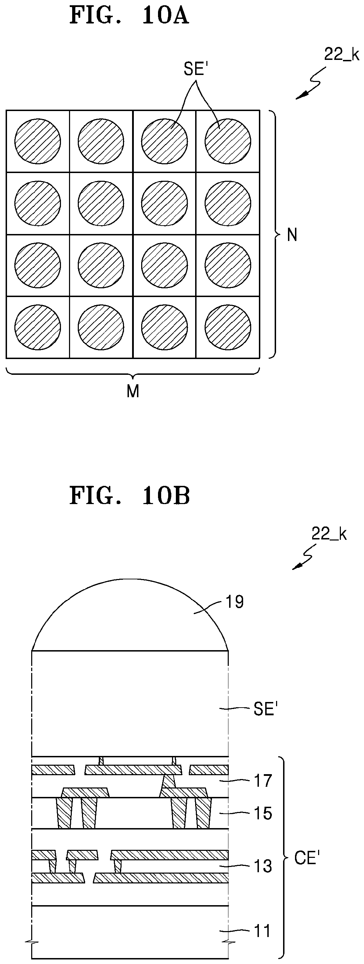

FIGS. 10A and 10B are a plan view and a cross-sectional view schematically illustrating a structure of a photodetection pixel of a LiDAR device of a comparative example.

The LiDAR device of the comparative example does not include a driving lens as in an embodiment and thus a plurality of photodetection elements SE' may be included in a photodetection pixel 22_k that receives light from a subregion SF_k. The plurality of photodetection elements SE' may be arranged in a 2D MxN array to receive all of reflected light at a plurality of positions on the subregion SF_k. Circuit elements CE' may be disposed in a vertical structure below a photodetection element SE' to process a signal of the photodetection element SE' as shown in FIG. 10B. The circuit elements CE' may be embodied, for example, as a plurality of layers 13, 15 and 17 on a silicon substrate 11. The silicon substrate 11 and the layer 13 may be separately fabricated and bonded to a structure including the circuit layer 17, the photodetection element SE', and a microlens 19 via the bonding layer 15. In this case, a plurality of photodetection elements SE' and circuit elements CE' corresponding thereto are required to be accurately aligned with each other. When a diameter of a cross-section of each of the photodetection elements SE' is about 10 µm, the alignment requires a very high-difficulty process and a manufacturing yield may be low.

In contrast, in the LiDAR device 1000 according to the above embodiment, the number of photodetection pixels 220_k may be set to be equal to the number of subregions SF_k divided from a target region TF and one photodetection element SE is included in one photodetection pixel 220_k. Since the circuit element CE and the photodetection element SE are arranged horizontally, the high-difficulty process required in the comparative examples may not be needed.

By comparing FIGS. 10A and 8 to each other, the number of photodetection elements SE in the embodiment is reduced to 1/16 of the number of photodetection elements SE' in the comparative example to receive reflected light from the subregion SF_k having the same size. However, in the case of an embodiment, the driving lens 280 is provided to detect all light reflected at different positions on the subregion SF_k and thus a resolution may be maintained to be substantially the same as in the comparative example.

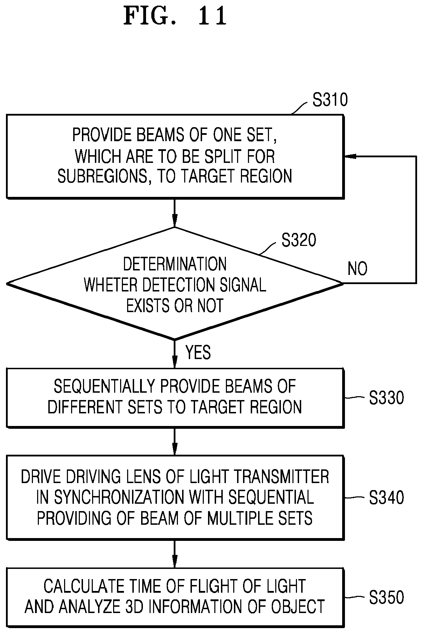

FIG. 11 is a flowchart of an example of a driving method of a LiDAR device according to an embodiment.

The driving method may be performed by the LiDAR device 1000 of FIG. 1.

The light transmitter 100 of the LiDAR device 1000 may provide beams of one of multiple sets of beams to a target region TF (operation S310).

Next, it is determined whether the light that is transmitted from the light transmitter 100 to the target region TF and then is reflected toward the light receive, is detected by the light receiver 200 (operation S320).

When there is no detection signal, operation S310 is repeatedly performed. This process may be repeatedly performed at certain time intervals.

If there is a detection signal, it is determined that a subject is present in the target region TF, and beams of different sets are sequentially provided to the target region TF to analyze a position, shape, etc. of the subject (operation S330).

In synchronization with the sequential provision of the beams, a driving lens of the light receiver 200 may be driven (operation S340), and a time of flight of light is calculated from a signal received by the light receiver 200 and 3D information of the subject in the target region TF is analyzed (operation S350).

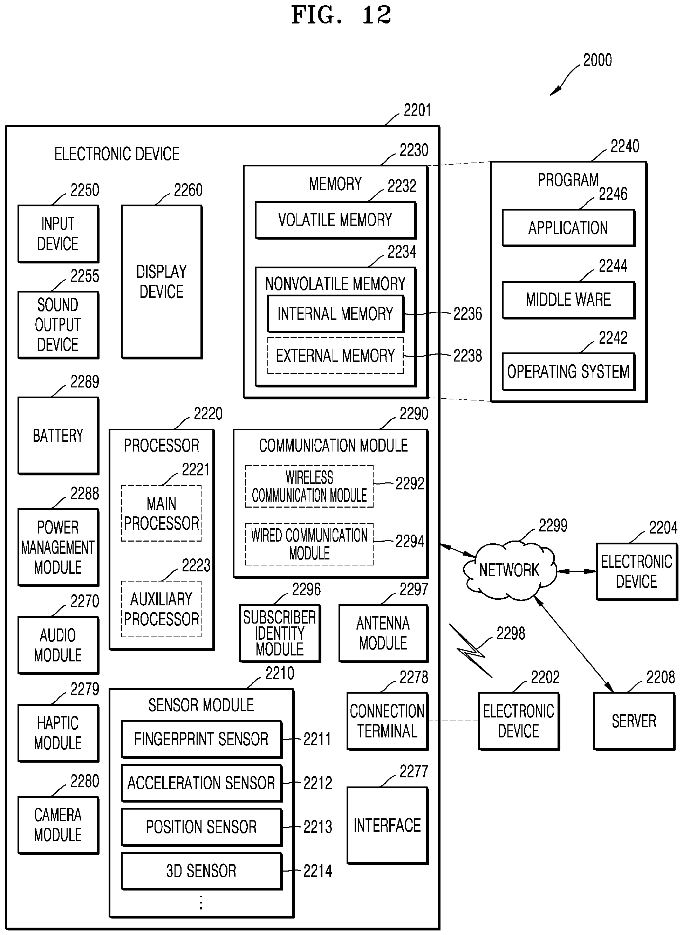

FIG. 12 is a schematic block diagram of an electronic apparatus including a LiDAR device according to an embodiment.

Referring to FIG. 12, in a network environment 2000, an electronic device 2201 may communicate with another electronic device 2202 through a first network 2298 (a short-range wireless communication network or the like) or communicate with another electronic device 2204 and/or a server 2208 through a second network 2299 (a long-distance wireless communication network or the like). The electronic device 2201 may communicate with the electronic device 2204 through the server 2208. The electronic device 2201 may include a processor 2220, a memory 2230, an input device 2250, a sound output device 2255, a display device 2260, an audio module 2270, a sensor module 2210, an interface 2277, a haptic module 2279, a camera module 2280, a power management module 2288, a battery 2289, a communication module 2290, a subscriber identification module 2296, and/or an antenna module 2297. In the electronic device 2201, some (e.g., the display device 2260) of these components may be omitted or other components may be added. Some of these components may be embodied together as one integrated circuit. For example, a fingerprint sensor 2211, an iris sensor, an illuminance sensor, and the like of the sensor module 2210 may be embedded in the display device 2260 (a display, etc.).

The processor 2220 may execute software (e.g., a program 2240) to control one or more components (hardware, software components, etc.) of the electronic device 2201, which are connected to the processor 2220, and perform various data processing or operations. As part of data processing or operations, the processor 2220 may load commands and/or data received from other components (the sensor module 2210, the communication module 2290, etc.) to a volatile memory 2232, process a command and/or data stored in the volatile memory 2232, and store resulting data in a nonvolatile memory 2234. The processor 2220 may include a main processor 2221 (a central processing unit, an application processor, or the like), and an auxiliary processor 2223 (a graphical processing device, an image signal processor, a sensor hub processor, a communication processor, or the like) operable independently of or together with the main processor 2221. The auxiliary processor 2223 may use less power than the main processor 2221 and perform a specialized function.

The auxiliary processor 2223 may control functions related to some components of the electronic device 2201 (the display device 2260, the sensor module 2210, the communication module 2290, etc.) and/or states of the components, in place of the main processor 2221 while the main processor 2221 is in an inactive state (a sleep state) or together with the processor 2221 while the main processor 2221 is in an active state (an application execution state). The auxiliary processor 2223 (an image signal processor, a communication processor, or the like) may be implemented as part of another component (the camera module 2280, the communication module 2290, or the like) which is functionally relevant thereto.

The memory 2230 may store various types of data necessary for the components (the processor 2220, the sensor module 2210, etc.) of the electronic device 2201. The data may include, for example, software (the program 2240, etc.) and input data and/or output data regarding a command associated thereto. The memory 2230 may include the volatile memory 2232 and/or the nonvolatile memory 2234.

The program 2240 may be stored as software in the memory 2230, and include an operating system 2242, middleware 2244, and/or an application 2246.

The input device 2250 may receive commands and/or data to be used with respect to the components (the processor 2220, etc.) of the electronic device 2201 from the outside (a user, etc.) of the electronic device 2201. The input device 2250 may include a microphone, a mouse, a keyboard, and/or a digital pen (a stylus pen, etc.).

The sound output device 2255 may output a sound signal to the outside of the electronic device 2201. The sound output device 2255 may include a speaker and/or a receiver. The speaker may be used for general purposes, e.g., to play back multimedia or reproduce recorded data, and the receiver may be used to receive a call. The receiver may be coupled to the speaker as a part of the speaker or may be implemented as a separate device independently of the speaker.

The display device 2260 may visually provide information to the outside of the electronic device 2201. The display device 2260 may include a display, a hologram device, or a projector, and a control circuit for controlling the display, the hologram device, or the projector. The display device 2260 may include touch circuitry configured to sense a touch and/or a sensor circuit (such as a pressure sensor) configured to measure the intensity of a force generated by a touch.

The audio module 2270 may convert sound into an electrical signal or an electrical signal into sound. The audio module 2270 may obtain sound through the input device 2250 or may output sound through the sound output device 2255, a speaker of another electronic device (e.g., the electronic device 2202) connected to the electronic device 2201 directly or wirelessly, and/or a headphone.

The sensor module 2210 may detect an operating state (power, temperature, etc.) of the electronic device 2201 or an external environmental state (a user's state, etc.), and generate an electrical signal and/or a data value corresponding to the detected state. The sensor module 2210 may include the fingerprint sensor 2211, an acceleration sensor 2212, a position sensor 2213, a 3D sensor 2214, etc., and may further include an iris sensor, a gyro sensor, a pressure sensor, a magnetic sensor, a grip sensor, a proximity sensor, a color sensor, an infrared (IR) sensor, a biosensor, a temperature sensor, a humidity sensor, and/or an illuminance sensor.

The 3D sensor 2214 emits light to a subject and analyze light reflected from the subject to sense a shape, movement, etc. of the subject, and the LiDAR device 1000 described above with reference to FIGS. 1 to 9 may be employed as the 3D sensor 2214. As described above with reference to FIG. 11, the 3D sensor 2214 may divide a target region in a target field of view into a plurality of subregions and emit beams of a set, which are to be sequentially split, to the plurality of subregions at certain time intervals. When a subject is present in the target region and light reflected from the subject is detected, digital-scanning of the target region may be started and information about the subject may be analyzed.

The interface 2277 may support one or more specified protocols for directly or wirelessly connecting the electronic device 2201 to another electronic device (the electronic device 2202, etc.). The interface 2277 may include a high-definition multimedia interface (HDMI), a universal serial bus (USB) interface, a secure digital (SD) card interface, and/or an audio interface.

A connection terminal 2278 may include a connector for physically connecting the electronic device 2201 to another electronic device (the electronic device 2202, etc.). The connection terminal 2278 may include an HDMI connector, a USB connector, an SD card connector, and/or an audio connector (a headphone connector, etc.).

The haptic module 2279 may convert an electrical signal into a mechanical stimulus (vibration, a motion, etc.) or an electrically stimulus so that a user may recognize the electrical signal through a tactile or exercise sensation. The haptic module 2279 may include a motor, a piezoelectric element, and/or an electrical stimulation device.

The camera module 2280 may capture still images and moving pictures. The camera module 2280 may include a lens assembly including one or more lenses, image sensors, image signal processors, and/or flashes.

The power management module 2288 may manage power to be supplied to the electronic device 2201. The power management module 2288 may be implemented as part of a Power Management Integrated Circuit (PMIC).

The battery 2289 may supply power to the components of the electronic device 2201. The battery 2289 may include a non-rechargeable primary battery, a rechargeable secondary battery and/or a fuel cell.

The communication module 2290 may establish a direct (wired) communication channel and/ a wireless communication channel between the electronic device 2201 and another electronic device (the electronic device 2202, the electronic device 2204, the server 2208 or the like), and support communication through the established communication channel. The communication module 2290 may include one or more processors that are operated independently of the processor 2220 (an application processor, etc.) and support direct communication and/or wireless communication. The communication module 2290 may include a wireless communication module 2292 (a cellular communication module, a short-range wireless communication module, a Global Navigation Satellite System (GMSS) communication module, etc.) and/or a wired communication module 2294 (a Local Area Network (LAN) communication module, a power line communication module, etc.). Among these communication modules, a corresponding communication module may communicate with another electronic apparatus through the first network 2298 (a short-range communication network such as Bluetooth, WiFi Direct, or Infrared Data Association (IrDA)) or the second network 2299 (a long-distance communication network such as a cellular network, the Internet, or a computer network (LAN, WAN, etc.)). Such various types of communication modules may be integrated into one component (a single chip or the like) or implemented as a plurality of separate components (a plurality of chips). The wireless communication module 2292 may identify and authenticate the electronic apparatus 2201 in a communication network such as the first network 2298 and/or the second network 2299, based on subscriber information (an International Mobile subscriber identifier (IMSI), etc.) stored in the subscriber identification module 2296.

The antenna module 2297 may transmit a signal and/or power to or receive a signal and/or power from the outside (another electronic apparatus or the like). The antenna module 2297 may include a radiator including a conductive pattern on a substrate (a printed circuit board (PCB) or the like). The antenna module 2297 may include one or more antennas. When a plurality of antennas are included in the antenna module 2297, an antenna appropriate for a communication method employed in a communication network such as the first network 2298 and/or the second network 2299 may be selected by the communication module 2290 from among the plurality of antennas. A signal and/or power may be transmitted or received between the communication module 2290 and another electronic apparatus via the selected antenna. In addition to the antenna, other components (a radio-frequency integrated circuit (RFIC), etc.) may be provided as part of the antenna module 2297.

Some of the components may be connected to one another and exchange signals (commands, data, etc.) with one another by a communication method (a bus, a General-Purpose Input and Output (GPIO), a Serial Peripheral Interface (SPI), or a Mobile Industry Processor Interface (MIPI)).

Command or data may be transmitted or received between the electronic device 2201 and the electronic device 2204, which is an external device, through the server 2208 connected to the second network 2299. The other electronic devices 2202 and 2204 may be device of the same type as or a different type from the electronic device 2201. All or some of operations to be performed by the electronic device 2201 may be performed by at least one of the electronic device 2202 and 2204 and the server 2208. For example, when a function or service is to be performed by the electronic device 2201, one or more other electronic devices may be requested to perform the entire or part of the function or service instead of performing the function or service by the electronic apparatus 2201. One or more other electronic apparatuses receiving the request may perform an additional function or service associated with the request and transmit a result of performing the additional function to the electronic device 2201. To this end, cloud computing, distributed computing, and/or client-server computing technology may be used.

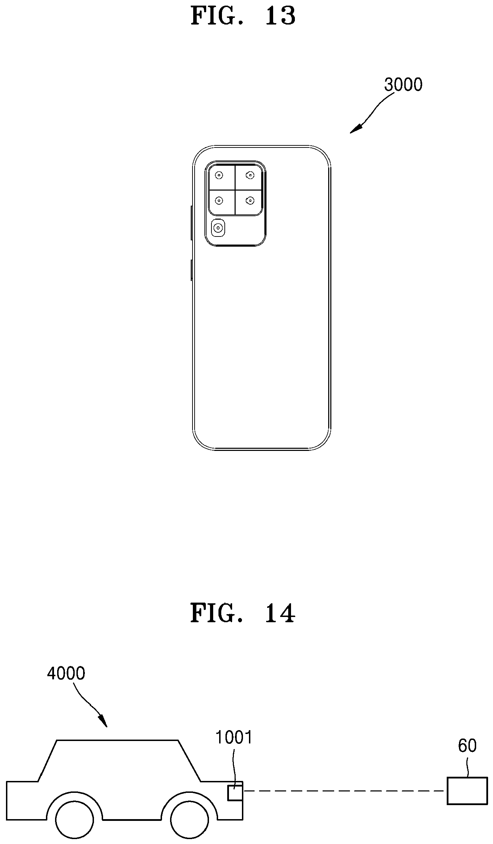

FIG. 13 is a perspective view of an example of an electronic apparatus to which a LiDAR device according to an embodiment is applied.

Although FIG. 13 illustrates a mobile phone or a smartphone 3000, an electronic apparatus to which the LiDAR device is applied is not limited thereto. For example, the LiDAR device is applicable to a tablet, a smart tablet, a laptop computer, a television, a smart television, etc.

Alternatively, the LiDAR device of the embodiment is applicable to an autonomous driving device.

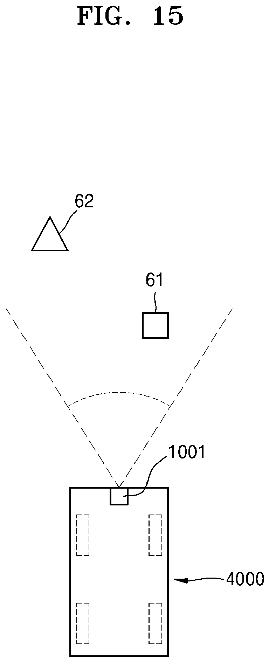

FIGS. 14 and 15 are conceptual diagrams illustrating cases in which a LiDAR device is applied to a vehicle according to an embodiment, and are a cross-sectional view and a plan view, respectively.

Referring to FIG. 14, a LiDAR device 1001 may be applied to a vehicle 4000 and information about a subject 60 may be obtained using the LiDAR device 1001. The LiDAR device 1000 described above with reference to FIGS. 1 to 9 may be employed as the LiDAR device 1001. The LiDAR device 1001 may use the time-of-flight (TOF) method to obtain information about the subject 60. The vehicle 4000 may be a car with an autonomous driving function. As described above with reference to FIG. 11, the LiDAR device 1101 may divide a target region in a target field of view into a plurality of subregions and emit beams of a set, which are sequentially split, to the plurality of subregions at certain time intervals. When a subject is present in the target region and light reflected from the subject is detected, digital-scanning of the target region may be started and information about the subject may be analyzed. Using the LiDAR device 1001, an object or a person located in a direction in which the vehicle 4000 is moving, i.e., the subject 60, may be detected and a distance to the subject 60 may be measured using a time difference between a transmitted signal and a detected signal. As illustrated in FIG. 15, information about a subject 61 in a near distance and a subject 62 in a far distance within the target region TF may be obtained.

FIGS. 14 and 15 illustrate examples in which a LiDAR device is applied to a car but embodiments are not limited thereto. The LiDAR device is applicable to flying objects such as a drone, mobile devices, small-sized walking means (e.g., a bicycle, a motorcycle, a stroller, a skateboard, etc.), a robot, a human/animal assistance means (e.g., a cane, a helmet, ornaments, clothing, a watch, a bag, etc.), Internet-of-Things (loT) devices/systems, security devices/systems, and the like.

In the LiDAR device described above, a movable driving lens is included in a light receiver and thus light incident in different directions may be easily focused on a photodetection element occupying a small area in a photodetection pixel.

In the LiDAR device described above, a photodetection element and a circuit element may be disposed horizontally with each other in a same plane within a photodetection pixel, thereby increasing a process yield.

The LiDAR device described above uses multiple sets of beams to illuminate an entire target region and thus is capable of being driven at high speeds.

The LiDAR device described above may be used in various types of electronic apparatuses and autonomous driving devices.

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A light detection and ranging, LiDAR, device comprising:
a light transmitter configured to:
generate a plurality of beams to be transmitted at different times, respectively; and
split each of the plurality of beams into a plurality of sub-beams and transmit the plurality of sub-beams to a plurality of subregions of a target region at each of the different times;
a light receiver comprising:
a plurality of photodetection pixels, each of the plurality of photodetection pixels comprising a photodetection element and a circuit element configured to process an output signal of the photodetection element; and
a driving lens that is provided on each of the plurality of photodetection pixels and configured to move to focus the plurality of sub-beams that are reflected from the plurality of subregions of the target region, on the photodetection element; and
a processor configured to control time-division driving on the light transmitter to transmit the plurality of beams at the different times, and control a movement of the driving lens in synchronization with the time-division driving.

2. The LiDAR device of claim 1, wherein the light transmitter comprises:
a light source array including a plurality of light sources; and
an optical element configured to split light from the light source array into the plurality of beams, and optionally wherein the processor is further configured to divide the plurality of light sources into a plurality of groups and sequentially drive the plurality of groups.

3. The LiDAR device of claim 1, wherein the photodetection element is provided in a center region of each of the plurality of photodetection pixels, and
the circuit element is provided in a peripheral region of each of plurality of the photodetection pixels to be parallel with the photodetection element.

4. The LiDAR device of claim 3, wherein a ratio of an area of the photodetection pixel occupied by the photodetection element is 20% or less.

5. The LiDAR device of claim 3, wherein a ratio of an area of the photodetection pixel occupied by the photodetection element is 10% or less.

6. The LiDAR device of any of claims 3 to 5, wherein a size of each of the plurality of photodetection pixels is greater than or equal to 50 *µ*m x50 *µ*m.

7. The LiDAR device of any of claims 3 to 5, wherein the circuit element comprises a time counter configured to measure a time of flight of light detected by the photodetection element, and optionally wherein the circuit element further comprises:
a current-to-voltage conversion circuit configured to convert current output from the photodetection element into voltage;
an amplifier configured to amplify the voltage obtained through conversion by the current-to-voltage conversion circuit; and
a peak detector configured to detect a peak of a signal amplified by the amplifier.

8. The LiDAR device of any preceding claim, wherein a size of the driving lens corresponds to a size of a region of the photodetection pixel.

9. The LiDAR device of any preceding claim, wherein the driving lenses included in the plurality of photodetection pixels are integrally connected to each other to be moved together.

10. The LiDAR device of any preceding claim, wherein a number of the plurality of photodetection pixels is equal to a number of the plurality of subregions, and optionally wherein the plurality of photodetection pixels are arranged two-dimensionally in a 24x24 to 64x64 array, and further optionally wherein the plurality of subregions are arranged two-dimensionally in a 24x24 to 64x64 array.

11. The LiDAR device of any preceding claim, wherein a number of states in which the driving lens is driven to obtain information of the target region is equal to a number of the plurality of beams, and optionally wherein the movement of the driving lens comprises a horizontal movement, a tilt movement, and a combination thereof.

12. The LiDAR device of any preceding claim, wherein the photodetection element comprises at least one of a complementary metal-oxide-semiconductor, CMOS, image sensor, CIS, an Avalanche photo diode, APD, or a single photon Avalanche diode, SAPD.

13. The LiDAR device of any preceding claim, wherein the processor is further configured to control the light transmitter to provide one set of the plurality of sub-beams to the target region and start the time-division driving when the one set of the plurality of sub-beams that are reflected from the target region is detected by the light receiver, and optionally wherein the processor is further configured to control the light transmitter to provide the plurality of sub-beams that are split from a first beam, among the plurality of beams, to the target region and provide the plurality of sub-beams that are split from a second beam, among the plurality of beams, to the target region when the plurality of sub-beams that are split from the first beam and are reflected from the target region, are not detected by the light receiver.

14. An electronic apparatus comprising;
the LiDAR device of any preceding claim;
a memory; and
a processor configured to load a command or data received from the LiDAR device to the memory and process the command or data stored in the memory.

15. A method of controlling a light detection and ranging, LiDAR, device, the method comprising:
transmitting to a target region, a plurality of sub-beams that are split from each of a plurality of beams, at a plurality of different transmission times; and
moving a driving lens, which is provided on each of a plurality of photodetection pixels, to a position that causes the plurality of sub-beams to be focused on a photodetection element included in each of the plurality of photodetection pixels,
wherein the position of the driving lens changes to be different at each of the plurality of different transmission times.
